# EUROPEAN PATENT APPLICATION

(11) **EP 4 769 607 A1**
(43) Date of publication of application: **01.07.2026**
(21) Application number: 25867194.0
(22) Date of filing: 28.08.2025
(51) Int. Cl.: H01M 10/04, H01M 10/0587, H01M 50/183, H01M 50/198, B65H 19/29, B65H 35/00

(54) **SEALING TAPE ATTACHMENT DEVICE CAPABLE OF ADJUSTING DISPENSED LENGTH OF SEALING TAPE**

(30) Priority: 28.10.2024 KR 20240148649
(71) Applicant: LG ENERGY SOLUTION, LTD., Seoul 07335 (KR)
(72) Inventor: HWANG, Jae Hoon, Daejeon 34122 (KR)
(74) Representative: Goddar, Heinz J.
(86) International application number: PCT/KR2025/013139
(87) International publication number: WO 2026/095298

(57) **Abstract**

Disclosed is a sealing tape attachment apparatus including a first supply unit configured to supply a jelly-roll type assembly, a second supply unit configured to supply a sealing tape to be attached to a winding end of the jelly-roll type assembly, a cutting unit configured to cut the sealing tape, a suction unit configured to suction the sealing tape supplied from the second supply unit, and a pressing unit configured to attach the sealing tape to the electrode assembly, wherein the second supply unit is configured such that the length of the sealing tape supplied varies according to the diameter of the jelly-roll type assembly.

## Description

### [Technical Field]

This application claims the benefit of priority to Korean Patent Application No. 2024-0148649 filed on October 28, 2024, the disclosure of which is incorporated herein by reference in its entirety.

The present invention relates to a sealing tape attachment apparatus capable of adjusting the extraction length of a sealing tape. More particularly, the present invention relates to a sealing tape attachment apparatus capable of adjusting the extraction length of a sealing tape such that an appropriate length of the sealing tape can be attached according to the diameter of a jelly-roll type assembly supplied to a supply position of the jelly-roll type assembly.

### [Background Art]

Research and development on lithium secondary batteries, which exhibit high energy density and high power characteristics, is actively underway due to the need for eco-friendly alternative energy sources driven by rapidly worsening climate change and carbon emission regulations.

Lithium secondary batteries may be categorized by shape into cylindrical battery cells, prismatic battery cells, and pouch-shaped battery cells, and cylindrical battery cells are widely used due to the structural safety and standardized size thereof.

Generally, a cylindrical battery cell is manufactured by applying an electrode active material to an electrode current collector, drying the same, rollpressing and cutting the same to manufacture a positive electrode sheet and a negative electrode sheet, winding the positive electrode sheet and negative electrode sheet in the state in which a separator sheet is inserted therebetween to form a jelly-roll type electrode assembly, inserting the jelly-roll electrode assembly into a cylindrical battery can, injecting an electrolyte into the cylindrical battery can, and sealing the cylindrical battery can.

Defects may occur during manufacture of the positive electrode sheet, the negative electrode sheet, and the separator sheet, and it is difficult to immediately remove a defective part in a specific process step where the defect occurs. Therefore, a defective positive electrode sheet, a defective negative electrode sheet, and a defective separator sheet are wound into a jelly-roll form, a sealing tape configured to prevent unwinding of the jelly-roll is attached to the jelly-roll, and the jelly-roll is discharged for disposal.

The sealing tape is attached to a winding end of the jelly-roll type assembly wound in the jelly-roll form. If the sealing tape is poorly attached, the jelly-roll type assembly may be unwound.

Meanwhile, as the diameter of the jelly-roll type assembly decreases, the appropriate extraction length of the sealing tape increases, and as the diameter of the jelly-roll type assembly increases, the appropriate extraction length of the sealing tape decreases.

For example, if a defective electrode sheet occurs, a single-wound assembly in which only a defective positive electrode sheet or a defective negative electrode sheet is wound may be formed, if a defective separator sheet occurs, a single-wound separator assembly in which only the separator sheet is wound may be formed, and a normal positive electrode sheet, a normal negative electrode sheet, and a normal separator sheet may be wound to form a combined-wound assembly. The diameters of the single-wound assembly, the single-wound separator assembly, and the combined-wound assembly may be different from each other.

However, in a conventional sealing tape attachment apparatus, when the extraction length of the sealing tape to be attached to the winding end of the jelly-roll type assembly is set to a specific length, the sealing tape is extracted only by the set length. Therefore, if the extraction length of the sealing tape is set to match the combined-wound assembly, which has a relatively large diameter, the sealing tape may be folded or wrinkled due to the short length of the sealing tape when the sealing tape is applied to the single-wound assembly, which has a relatively small diameter, whereby the sealing tape may be poorly attached to an outer surface of the jelly-roll type assembly.

In this regard, Patent Document 1 relates to a seal tape attachment method, wherein a method and apparatus for attaching a seal tape to a jelly-roll type electrode assembly with adequate adhesion without damage to or overlapping of the seal tape are disclosed.

However, Patent Document 1 does not suggest technology capable of adjusting the length of the seal tape in response to changes in the diameter of the jelly-roll type electrode assembly.

Therefore, there is a need for technology capable of supplying a sealing tape of an appropriate length according to changes in the diameter of a jelly-roll type assembly supplied to a sealing tape attachment apparatus, thereby preventing poor attachment of the sealing tape.

### (Prior Art Document)

(Patent Document 1) Korean Patent Application Publication No. 2017-0035216 (2017.03.30)

### [Disclosure]

### [Technical Problem]

The present invention has been made in view of the above problems, and it is an object of the present invention to provide a sealing tape attachment apparatus capable of supplying an appropriate length of a sealing tape according to the diameter of a jelly-roll type assembly that is supplied, thereby securing adhesiveness of the sealing tape.

### [Technical Solution]

A sealing tape attachment apparatus according to the present invention to accomplish the above object includes a first supply unit configured to supply a jelly-roll type assembly, a second supply unit configured to supply a sealing tape to be attached to a winding end of the jelly-roll type assembly, a cutting unit configured to cut the sealing tape, a suction unit configured to suction the sealing tape supplied from the second supply unit, and a pressing unit configured to attach the sealing tape to the electrode assembly, wherein the second supply unit is configured such that the length of the sealing tape supplied varies according to the diameter of the jelly-roll type assembly.

In the sealing tape attachment apparatus according to the present invention, the jelly-roll type assembly may be any one selected from the group consisting of a single-wound separator assembly in which only a separator is wound, a single-wound assembly in which any one of a positive electrode and a negative electrode is wound, and a combined-wound assembly in which both a positive electrode and a negative electrode are wound.

In the sealing tape attachment apparatus according to the present invention, the first supply unit may include a winding portion configured to wind the single-wound assembly, the combined-wound assembly, or the single-wound separator assembly, an attachment portion configured to attach the sealing tape to the jelly-roll type assembly assembled by the winding portion, and a discharge portion configured to discharge the jelly-roll type assembly having the sealing tape attached thereto, wherein the winding portion, the attachment portion, and the discharge portion may define a rotary body that shares a single rotary shaft, and wherein the first supply unit may be configured to attach the sealing tape to the jelly-roll type assembly and to discharge the jelly-roll type assembly while rotating about the rotary shaft.

In the sealing tape attachment apparatus according to the present invention, the second supply unit may include an extraction chuck configured to transfer the sealing tape, a gripper configured to fix the sealing tape to the extraction chuck, and an extraction chuck mounting portion configured to allow the extraction chuck to be mounted thereon, wherein the extraction chuck may be configured to move in a forward direction and a backward direction in a state of being mounted on the extraction chuck mounting portion.

The sealing tape attachment apparatus according to the present invention may further include a controller configured to collect information about the type of the jelly-roll type assembly supplied from the first supply unit and to set and store the movement distance of the extraction chuck in the forward direction according to the type of the jelly-roll type assembly, wherein the extraction chuck may be configured to move by the movement distance set by the controller.

In the sealing tape attachment apparatus according to the present invention, as the diameter of the jelly-roll type assembly decreases, the movement distance of the extraction chuck may increase, and the length of the sealing tape supplied may increase.

In the sealing tape attachment apparatus according to the present invention, a servomotor may be configured to move the extraction chuck.

In the sealing tape attachment apparatus according to the present invention, the cutting unit may include a cutter configured to cut the sealing tape and a cutter transfer portion configured to transfer the cutter toward the sealing tape, and the cutter transfer portion may be configured to transfer the cutter in a direction orthogonal to the sealing tape.

In the sealing tape attachment apparatus according to the present invention, the suction unit may include a suction pad configured to suction the sealing tape and a suction pad transfer portion configured to transfer the suction pad such that the sealing tape is attached to the jelly-roll type assembly.

In the sealing tape attachment apparatus according to the present invention, the cutting unit may be configured to cut the sealing tape in the state in which the sealing tape is suctioned by the suction pad.

In the sealing tape attachment apparatus according to the present invention, the pressing unit may include a nip roll configured to attach the sealing tape to a surface of the jelly-roll type assembly and a nip roll transfer portion configured to transfer the nip roll.

In the sealing tape attachment apparatus according to the present invention, when the jelly-roll type assembly on the attachment portion of the first supply unit rotates, the nip roll may be configured to rotate while pressing the jelly-roll type assembly attaching the sealing tape to the surface of the rotating jelly-roll type assembly.

The present invention provides a sealing tape attachment method using the sealing tape attachment apparatus. Specifically, the sealing tape attachment method includes a first step of winding a jelly-roll type assembly through the winding portion of the first supply unit for manufacture and disposing the jelly-roll type assembly on the attachment portion, a second step of extracting a sealing tape through the second supply unit, a third step of the suction unit moving toward the sealing tape and suctioning the sealing tape through the suction pad to fix the sealing tape, a fourth step of the cutting unit moving toward the sealing tape and cutting the sealing tape, and a fifth step of the pressing unit moving toward the sealing tape and the nip roll pushing the sealing tape to attach the sealing tape to a winding end of the jelly-roll type assembly.

In the sealing tape attachment method according to the present invention, the movement distance of the extraction chuck may be preset according to the diameter of the jelly-roll type assembly, and the extraction length of the sealing tape in the second step may be determined to be the length by which the extraction chuck discharges the sealing tape while moving by the preset length.

In addition, the present invention may provide various combinations of the above solving means.

### [Advantageous Effects]

As is apparent from the above description, in a sealing tape attachment apparatus according to the present invention, setting is performed such that an appropriate length of a sealing tape can be extracted according to the diameter of a jelly-roll type assembly, whereby it is possible to secure adhesiveness of the sealing tape.

Therefore, it is possible to prevent loosening of the jelly-roll type assembly caused by poor attachment of the sealing tape.

### [Description of Drawings]

FIG. 1 is a perspective view of a sealing tape attachment apparatus according to the present invention.
FIG. 2 is a front view schematically showing a part of the structure of FIG. 1.
FIG. 3 is a perspective view of a second supply unit and a cutting unit of FIG. 1.
FIG. 4 is a perspective view of a suction unit and a pressing unit of FIG. 1.
FIG. 5 is a schematic view showing a process of attaching a sealing tape using the sealing tape attachment apparatus.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

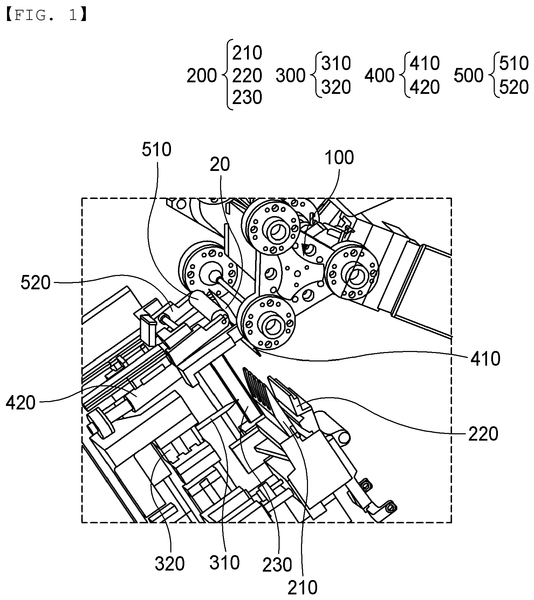

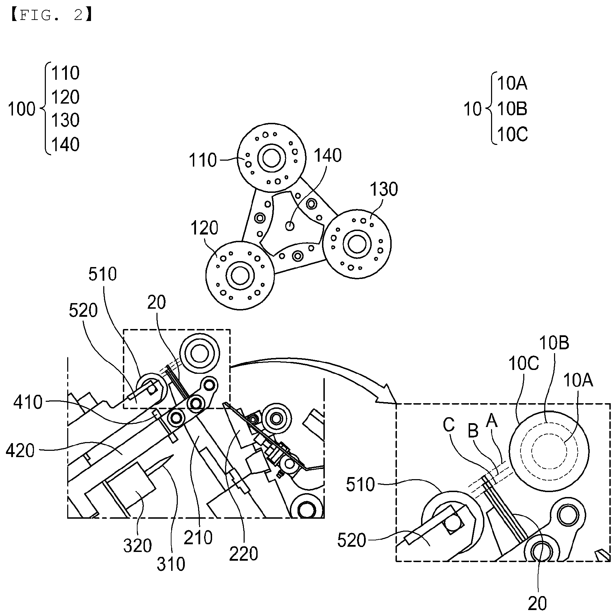

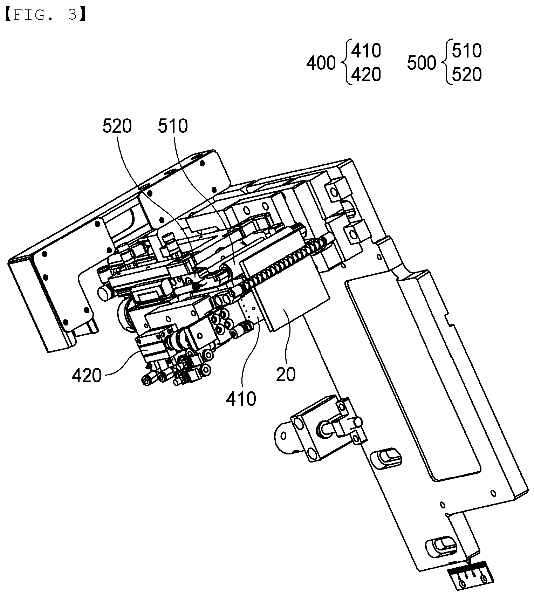

FIG. 1 is a perspective view of a sealing tape attachment apparatus according to the present invention, FIG. 2 is a front view schematically showing a part of the structure of FIG. 1, and FIG. 3 is a perspective view of a second supply unit and a cutting unit of FIG. 1.

Referring to FIGs. 1 to 3, the sealing tape attachment apparatus according to the present invention includes a first supply unit 100 configured to supply a jelly-roll type assembly 10, a second supply unit 200 configured to supply a sealing tape 20 to be attached to a winding end of the jelly-roll type assembly 10, a cutting unit 300 configured to cut the sealing tape 20, a suction unit 400 configured to suction the sealing tape 20 supplied from the second supply unit 200, and a pressing unit 500 configured to attach the sealing tape 20 to the electrode assembly 10.

The jelly-roll type assembly 10 is any one selected from the group consisting of a single-wound assembly 10B in which any one of a positive electrode and a negative electrode is wound, a combined-wound assembly 10C in which both a positive electrode and a negative electrode are wound, and a single-wound separator assembly 10A in which only a separator is wound.

Generally, the diameter of the jelly-roll type assembly 10 may increase in the order of the single-wound separator assembly 10A, the single-wound assembly 10B, and the combined-wound assembly 10C, and the second supply unit 200 may be set such that the length of the sealing tape 20 that is supplied varies according to the diameter of the jelly-roll type assembly 10.

The first supply unit 100 includes a winding portion 110 configured to wind the single-wound separator assembly 10A, the single-wound assembly 10B, or the combined-wound assembly 10C, an attachment portion 120 configured to attach the sealing tape 20 to the jelly-roll type assembly 10 assembled by the winding portion 110, and a discharge portion 130 configured to discharge the jelly-roll type assembly 10 having the sealing tape 20 attached thereto, wherein the winding portion 110, the attachment portion 120, and the discharge portion 130 constitute a rotary body that shares a single rotary shaft 140. The first supply unit 100 is configured to send the jelly-roll type assembly 10 assembled by the winding portion 110 to the attachment portion 120 while rotating about the rotary shaft 140, to attach the sealing tape 20 to the jelly-roll type assembly 10 through the attachment portion 120, and to discharge the jelly-roll type assembly 10 through the discharge portion 130.

The second supply unit 200 includes an extraction chuck 210 configured to transfer the sealing tape 20, a gripper 220 configured to fix the sealing tape 20 to the extraction chuck 210, and an extraction chuck mounting portion 230 configured to allow the extraction chuck 210 to be mounted thereon, wherein the extraction chuck 210 moves in a forward direction and a backward direction in a state of being mounted on the extraction chuck mounting portion 230. The forward direction is a direction in which the extraction chuck 210 moves toward the jelly-roll type assembly 10 in a state of being mounted on the extraction chuck mounting portion 230, and the backward direction is a direction opposite the forward direction.

The sealing tape attachment apparatus according to the present invention further includes a controller (not shown) configured to collect information about the type of the jelly-roll type assembly 10 located at the attachment portion 120 of the first supply unit 100 and to set and store the movement distance of the extraction chuck 210 in the forward direction according to the type of the jelly-roll type assembly 10. The extraction chuck 210 may move by the movement distance set by the controller.

At this time, the movement of the extraction chuck 210 may be performed by a servomotor.

Referring to FIG. 2, A, B, and C denote ends of the sealing tape 20 extracted at appropriate lengths according to jelly-roll type assemblies 10 having different diameters. Specifically, A is an end of the sealing tape 20 extracted for attachment to the single-wound separator assembly 10A, B denotes an end of the sealing tape 20 extracted for attachment to the single-wound assembly 10B, and C denotes an end of the sealing tape extracted for attachment to the combined-wound assembly 10C. As to the length of the sealing tape 20 extracted from the second supply unit 200, the sealing tape 20 with end A has the longest length, and the sealing tape 20 with end C has the shortest length.

That is, as the diameter of the jelly-roll type assembly 10 decreases, the movement distance of the extraction chuck 210 may increase, and the length of the sealing tape 20 that is supplied may increase. On the other hand, as the diameter of the jelly-roll type assembly 10 increases, the movement distance of the extraction chuck 210 may decrease, and the length of the sealing tape 20 that is supplied may decrease. This is because, as the diameter of the jelly-roll type assembly 10 decreases, the distance by which the pressing unit 500 moves to attach the sealing tape 20 attached to a suction pad 410 to an outer surface of the jelly-roll type assembly increases, whereby a relatively longer sealing tape is required.

The cutting unit 300 includes a cutter 310 configured to cut the sealing tape 10 and a cutter transfer portion 320 configured to transfer the cutter 310 toward the sealing tape 20, wherein the cutter transfer portion 320 may transfer the cutter 310 in a direction orthogonal to the sealing tape 20. Alternatively, the length of the cutter 310 may be increased or decreased.

A type of cylinder may be used as the cutter transfer portion 320.

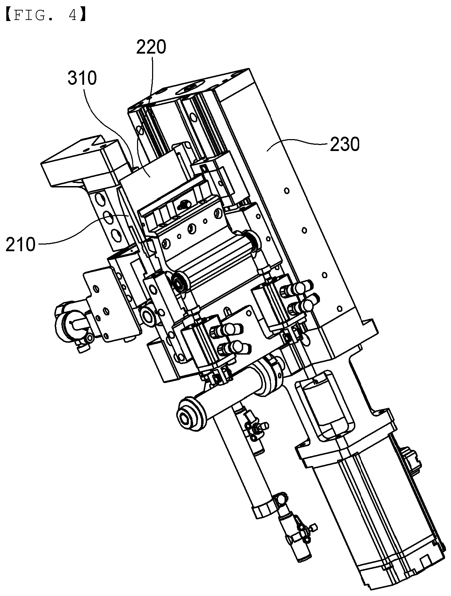

FIG. 4 is a perspective view of the suction unit and the pressing unit of FIG. 1.

Referring to FIG. 4 together with FIG. 3, the suction unit 400 includes a suction pad 410 configured to suction the sealing tape 20 and a suction pad transfer portion 420 configured to transfer the suction pad 410 such that the sealing tape 20 is attached to the jelly-roll type assembly 10. When the extraction chuck 210 of the second supply unit 200 extracts the sealing tape 20, the suction pad transfer portion 420 may extend such that the suction pad 410 is located on a lower surface of the extracted sealing tape 20. The sealing tape 20 may be fixed to an upper surface of the suction pad 410. In the state in which the sealing tape 20 extracted from the end of a sealing tape roll is suctioned by the suction pad 410, as described above, the cutting unit 300 may cut the sealing tape 20. When the cutter 310 of the cutting unit 300 cuts the sealing tape 20, the sealing tape 20 is separated from the sealing tape roll and is suctioned by the suction pad 410 so as to be fixed thereto.

A type of cylinder may be used as the suction pad transfer portion 420.

The pressing unit 500 includes a nip roll 510 configured to attach the sealing tape 20 to a surface of the jelly-roll type assembly 10 and a nip roll transfer portion 520 configured to transfer the nip roll 510.

In the state in which the sealing tape 20 is attached to the suction pad 410, the nip roll transfer portion 520 moves upward such that the nip roll 510 approaches the sealing tape 20, thereby pushing the sealing tape 20 so as to be attached to a winding end of the jelly-roll type assembly 10.

When the sealing tape 20 is attached to the jelly-roll type assembly 10, the nip roll 510 may rotate while pressing the sealing tape 20 during rotation of the jelly-roll type assembly 10, and the rotation of the nip roll 510 achieves the effect of rubbing the sealing tape 20 such that the sealing tape 20 is securely attached to the jelly-roll type assembly 10.

As the jelly-roll type assembly 10 on the attachment portion 120 of the first supply unit 100 rotates, as described above, the nip roll 510 also rotates, whereby the sealing tape 20 may be attached to the surface of the rotating jelly-roll type assembly 10 while forming a wider adhesive surface.

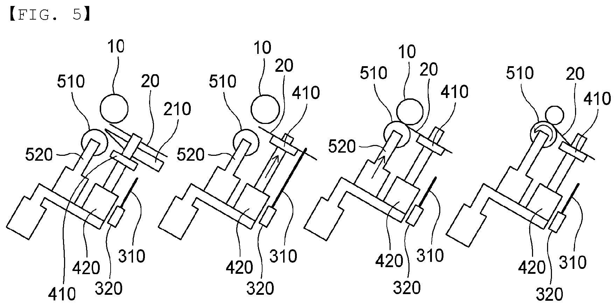

FIG. 5 is a schematic view showing a process of attaching a sealing tape using the sealing tape attachment apparatus.

Referring to FIG. 5 together with FIG. 2, the process of attaching the sealing tape using the sealing tape attachment apparatus according to the present invention includes a first step of winding a jelly-roll type assembly 10 through the winding portion 110 of the first supply unit 100 for manufacture and disposing the jelly-roll type assembly 10 on the attachment portion 120, a second step of extracting a sealing tape 20 through the second supply unit 200, a third step of the suction unit 400 moving toward the sealing tape 20 and suctioning the sealing tape 10 through the suction pad 410 to fix the sealing tape, a fourth step of the cutting unit 300 moving toward the sealing tape and cutting the sealing tape 20, and a fifth step of the pressing unit 500 moving toward the sealing tape 10 and the nip roll 510 pushing the sealing tape 20 to attach the sealing tape to a winding end of the jelly-roll type assembly 10.

In the fourth step, the cutter may cut the sealing tape by extension of the cutter transfer portion, or the length of the cutter may extend to the sealing tape such that the cutter can cut the sealing tape.

In the present invention, the movement distance of the extraction chuck 210 is preset according to the diameter of the jelly-roll type assembly 10, and the extraction length of the sealing tape 20 in the second step is determined to be the length by which the extraction chuck 210 discharges the sealing tape 20 while moving by the preset length.

The diameter of the jelly-roll type assembly 10 may vary depending on the type thereof. In the present invention, the movement distance of the extraction chuck that determines the extraction length of the sealing tape is preset according to the type of the jelly-roll type assembly 10. When the type of the jelly-roll type assembly 10 is transmitted to the controller, the controller may perform control such that the extraction chuck moves according to the preset type of the jelly-roll type assembly, whereby the sealing tape of a length corresponding to the diameter of the jelly-roll type assembly 10 may be extracted.

Therefore, the sealing tape of an appropriate length may be cut and attached to the jelly-roll type assembly by the nip roll, whereby it is possible to minimize attachment defects that may occur during attachment of the sealing tape.

Those skilled in the art to which the present invention pertains will appreciate that various applications and modifications are possible within the scope of the present invention based on the above description.

### (Description of Reference Symbols)

10: Jelly-roll type assembly
10A: single-wound separator assembly
10B: Single-wound assembly
10C: Combined-wound assembly
20: Sealing tape
100: First supply unit
110: Winding portion
120: Attachment portion
130: Discharge portion
140: Rotary shaft
200: Second supply unit
210: Extraction chuck
220: Gripper
230: Extraction chuck mounting portion
300: Cutting unit
310: Cutter
320: Cutter transfer portion
400: Suction unit
410: Suction pad
420: Suction pad transfer portion
500: Pressing unit
510: Nib roll
520: Nib roll transfer portion

## Claims

1. A sealing tape attachment apparatus comprising:
a first supply unit configured to supply a jelly-roll type assembly;
a second supply unit configured to supply a sealing tape to be attached to a winding end of the jelly-roll type assembly;
a cutting unit configured to cut the sealing tape;
a suction unit configured to suction the sealing tape supplied from the second supply unit; and
a pressing unit configured to attach the sealing tape to the electrode assembly, wherein
the second supply unit is configured such that a length of the sealing tape supplied varies according to a diameter of the jelly-roll type assembly.

2. The sealing tape attachment apparatus according to claim 1, wherein the jelly-roll type assembly is any one selected from a group consisting of a single-wound separator assembly in which only a separator is wound, a single-wound assembly in which any one of a positive electrode and a negative electrode is wound, and a combined-wound assembly in which both a positive electrode and a negative electrode are wound.

3. The sealing tape attachment apparatus according to claim 2, wherein
the first supply unit comprises:
a winding portion configured to wind the single-wound assembly, the combined-wound assembly, or the single-wound separator assembly;
an attachment portion configured to attach the sealing tape to the jelly-roll type assembly assembled by the winding portion; and
a discharge portion configured to discharge the jelly-roll type assembly having the sealing tape attached thereto,
wherein the winding portion, the attachment portion, and the discharge portion define a rotary body that shares a single rotary shaft, and
wherein the first supply unit is configured to attach the sealing tape to the jelly-roll type assembly and to discharge the jelly-roll type assembly while rotating about the rotary shaft.

4. The sealing tape attachment apparatus according to claim 1, wherein
the second supply unit comprises:
an extraction chuck configured to transfer the sealing tape;
a gripper configured to fix the sealing tape to the extraction chuck; and
an extraction chuck mounting portion configured to allow the extraction chuck to be mounted thereon,
wherein the extraction chuck is configured to move in a forward direction and a backward direction in a state of being mounted on the extraction chuck mounting portion.

5. The sealing tape attachment apparatus according to claim 4, further comprising:
a controller configured to collect information about a type of the jelly-roll type assembly supplied from the first supply unit and to set and store a movement distance of the extraction chuck in the forward direction according to the type of the jelly-roll type assembly,
wherein the extraction chuck is configured to move by the movement distance set by the controller.

6. The sealing tape attachment apparatus according to claim 5, wherein, as the diameter of the jelly-roll type assembly decreases, the movement distance of the extraction chuck increases, and the length of the sealing tape supplied increases.

7. The sealing tape attachment apparatus according to claim 5, wherein a servomotor is configured to movem the extraction chuck.

8. The sealing tape attachment apparatus according to claim 1, wherein
the cutting unit comprises:
a cutter configured to cut the sealing tape; and
a cutter transfer portion configured to transfer the cutter toward the sealing tape, and
wherein the cutter transfer portion is configured to transfer the cutter in a direction orthogonal to the sealing tape.

9. The sealing tape attachment apparatus according to claim 1, wherein the suction unit comprises:
a suction pad configured to suction the sealing tape; and
a suction pad transfer portion configured to transfer the suction pad such that the sealing tape is attached to the jelly-roll type assembly.

10. The sealing tape attachment apparatus according to claim 9, wherein the cutting unit is configured to cut the sealing tape in a state in which the sealing tape is suctioned by the suction pad.

11. The sealing tape attachment apparatus according to claim 1, wherein the pressing unit comprises:
a nip roll configured to attach the sealing tape to a surface of the jelly-roll type assembly; and
a nip roll transfer portion configured to transfer the nip roll.

12. The sealing tape attachment apparatus according to claim 11, wherein, when the jelly-roll type assembly on the attachment portion of the first supply unit rotates, the nip roll is configured to rotate while pressing the jelly-roll type assembly attaching the sealing tape to the surface of the rotating jelly-roll type assembly.

13. A sealing tape attachment method using the sealing tape attachment apparatus according to any one of claims 1 to 12, the sealing tape attachment method comprising:
a first step of winding a jelly-roll type assembly through the winding portion of the first supply unit for manufacture and disposing the jelly-roll type assembly on the attachment portion;
a second step of extracting a sealing tape through the second supply unit;
a third step of the suction unit moving toward the sealing tape and suctioning the sealing tape through the suction pad to fix the sealing tape;
a fourth step of the cutting unit moving toward the sealing tape and cutting the sealing tape; and
a fifth step of the pressing unit moving toward the sealing tape and the nip roll pushing the sealing tape to attach the sealing tape to a winding end of the jelly-roll type assembly.

14. The sealing tape attachment method according to claim 13, wherein
the movement distance of the extraction chuck is preset according to the diameter of the jelly-roll type assembly, and
an extraction length of the sealing tape in the second step is determined to be a length by which the extraction chuck discharges the sealing tape while moving by the preset length.
